# EUROPEAN PATENT SPECIFICATION

(11) **EP 1 649 628 B1**
(45) Date of publication and mention of the grant of the patent: **22.10.2008**
(21) Application number: 04743950.0
(22) Date of filing: 12.07.2004
(51) Int. Cl.: H04L 1/18

(54) **PACKET RETRANSMISSION FOR MIMO SYSTEMS USING MULIPATH TRANSMISSION**
PAKETWIEDERÜBERTRAGUNG FÜR MIMO-SYSTEME MITTELS MEHRWEGÜBERTRAGUNG
RETRANSMISSION DE PAQUETS POUR SYSTEMES MULTI-ENTREES/MULTI-SORTIES PAR TRANSMISSION MULTIVOIE

(30) Priority: 17.07.2003 GB 0316692
(43) Date of publication of application: 26.04.2006
(73) Proprietor: NXP B.V., 5656 AG Eindhoven (NL)
(72) Inventor: FIFIELD, Robert, Philips IP & Standards, Redhill, Surrey RH1 5HA (GB); EVANS, David H., Philips IP & Standards, Redhill, Surrey RH1 5HA (GB)
(74) Representative: van der Veer, Johannis Leendert
(86) International application number: PCT/IB2004/002288
(87) International publication number: WO 2005/008947

(56) References cited:
- EP-A- 0 851 632
- WO-A-01/15374
- US-A- 5 699 367
- US-A1- 2003 031 175

## Description

The present invention relates to wireless networks, and in particular to methods and apparatus for enhancing the efficiency of communication between a transmitter and a receiver on a wireless network.

The use of wireless networks in the office and the home for communication between multiple devices has recently proliferated. Such networks are typically characterised by the existence of multiple possible communication paths or channels between devices, in which each path may be susceptible to variable propagation efficiency, particularly as devices move around within the network, or as obstacles to transmission move around between antennae of the various devices or as RF energy scattering objects move around within the network area.

In a typical transmission network, a transmitter transmits data packets to a receiver device which acknowledges correct receipt of the packet with an acknowledge (ACK) signal. If the data received by the receiver contain errors or only part of the transmission is received, the receiver responds with a no-acknowledge (NACK) signal. There are various protocols for handling situations where the receiver receives no part of the packet at all. For example, in the event the transmitter receives no type of acknowledgement within a predetermined period of time, it assumes total failure of transmission and retries transmission at a later time.

The availability of multiple transmission paths in a network has previously been exploited to increase the reliability of transmission of data packets between devices. The multiple transmission paths in a multiple-input-multiple-output (MIMO) device environment can be provided by way of plural antennae on each device, and/or by several different transceiver nodes and transmission pathways between the transmitter and receiver.

US 2003/0012318 describes a system in which data to be transmitted from a transmitter to a receiver is divided into blocks, each of which is transmitted on a separate antenna. The receiver checks whether all blocks have been received and then issues an acknowledgement. If the transmission fails, the blocks are retransmitted using different spatial and temporal diversity for combination with the previously received blocks to obtain a better signal to noise ratio.

Similarly, EP 1294120 A1 describes a multiple-input-multiple-output device transmission system in which a transmitter transmits data to a receiver using plural antennae according to first predetermined transmission conditions defining the encoding, interleaving, modulation and sub-stream splitting transformations to be applied. The receiver returns either an acknowledge (ACK) or a no-acknowledge (NACK) signal. In the event of a NACK signal being returned, the transmitter retransmits the data according to second predetermined transmission conditions, the choice of second transmission conditions being so as to attempt to reduce the transmission error probability.

Both of these techniques generally attempt to alleviate transmission problems by varying the way in which the data is distributed across the same multiple paths between the transmitter and receiver in the event that a transmission failure occurs.

Another problem in communication between transmitter and receiver is the data transmission overhead that is implied by the repeated use of ACK and NACK requests (the signalling overhead), and the need for retransmission of data (the retransmission overhead).

One approach to alleviating this problem is described in US 2003/0067890. In this system, a transceiver receives standard protocol data units for transmission to receiver units within the wireless network. The transceiver divides the standard protocol data units into smaller sub-protocol units that are more suited to transmission over the wireless network, and provides the receiver with a map of the sub-protocol units to be expected. The sub-protocol units may be transmitted to the receiver on different frequency channels and time slots. The transmitter includes an acknowledge request indicator in the transmission to the receiver with only a subset of the sub-protocol units, so that the receiver need only acknowledge groups of the sub-protocol units. Using the map, the receiver can acknowledge which of the sub-protocol units of a group have been received, and the transceiver need only retransmit those particular sub-protocol units that were not received by the receiver. Thus, an acknowledge request need not be provided for every transmitted sub-protocol unit and the amount of data to be retransmitted is reduced.

EP 0 851 632 describes a method and network for packet transmission and retransmission by means of repeaters.

A problem that exists with all of these prior art methods is that it remains incumbent upon the originating transmitter to monitor acknowledge messages and to repeat data transmission to some extent in the event of a transmission failure. A further problem exists in that although the distribution of the data for retransmission across the various paths of the network may be altered after failure, the actual path configuration used to transmit that data remains effectively the same.

It is an object of at least one aspect of the present invention to provide a method and apparatus for improving the results obtained during retransmission of data after a transmission failure.

It is an object of at least one aspect of the present invention to reduce the burden on the transmitting device in respect of supervising the acknowledgement messages and data retransmission. Accordingly, it is an object of at least one aspect of the invention to reduce the signalling overhead and the retransmission overhead on the transmitting device.

The invention is particularly relevant and useful (though not exclusively so) where a transmitting device may be a portable, low power device with limited battery capacity which uses a network including repeater devices which are not power constrained.

For example, the network may comprise a plurality of devices that are mains powered (eg. wireless LAN repeater stations, desktop personal computers, printers, scanners, fax machines etc) and a plurality of portable

The invention is particularly relevant and useful (though not exclusively so) where a transmitting device may be a portable, low power device with limited battery capacity which uses a network including repeater devices which are not power constrained.

For example, the network may comprise a plurality of devices that are mains powered (eg. wireless LAN repeater stations, desktop personal computers, printers, scanners, fax machines etc) and a plurality of portable devices that are not mains powered (eg. notebook computers, mobile telephones, PDAs etc).

### Summary of Invention

According to one aspect, the present invention provides a method of transmitting data between a transmitter and a receiver, the method comprising the steps of:
transmitting, by the transmitter, a data packet onto multiple paths of a network between the transmitter and the receiver, comprising at least one path including at least one repeater transceiver node and a direct path between the transmitter and the receiver;
issuing a NACK signal over the network, by the receiver, in the event that the data packet is not properly received; and
receiving the NACK signal by the at least one repeater and retransmitting the data packet onto the network by at least one of the repeater nodes upon receipt of the NACK signal.

According to another aspect, the present invention provides a network of communicating nodes including a transmitter node (10), a receiver node (20) and at least one repeater node (30, 40) for forwarding data packets, received from a transmitter node (10), to the receiver node (20) that is the end destination of the packet, the network comprising:
a receive module (61) in the repeater node for receiving data packets originating from the transmitter;
a transmit module (62) in the repeater node for forwarding the data packet to another node in the network;
a pending packet buffer (63) in the repeater node for storing forwarded data packets; and
retransmission means in the repeater node (30, 40) for retransmitting, over the network (5), previously forwarded data packets for which NACK signals are received from the receiver node by the repeater node,
wherein the receiver node is arranged relative to the transmitter node and the repeater node to receive data packets via multiple paths of the network between the transmitter node and the receiver node, at least one of the paths including said at least one repeater node and one of the paths being a direct wireless transmission path between the transmitter and the receiver.

For the avoidance of doubt, the expression 'transmitter' is used to define the originator.of a data packet transmitted onto the network, and the expression 'receiver' is used to define the intended addressee or ultimate destination of the data packet. These terms are distinct from 'intermediate repeater nodes', or 'transceivers' which terms describe devices that merely serve to forward data packets through the network. However, it will be understood that, in general, a node that is capable of acting as a transmitter and/or a receiver for originating and/or terminating a data packet may also act as a repeater node for other (different) data packets that originate from and terminate at other nodes.

It is also noted that the expression 'retransmitting' is used to define the action of retransmitting a data packet for which a NACK signal has been issued, ie. the action of originating a retransmission of the packet. This is distinct from merely forwarding an existing data packet (including a retransmitted data packet) which is already in transit.
Figure 1 shows a schematic diagram of a wireless network comprising a transmitter, a receiver and at least two transceiver nodes, illustrating transmission paths for a data packet from the transmitter to the receiver;
Figure 2 shows a schematic diagram of the wireless network of figure 1 illustrating transmission paths for return of a NACK signal from the receiver to the transmitter;
Figure 3 shows a schematic diagram of the wireless network of figure 1 illustrating paths for retransmission of the data packet by the transceiver nodes and, optionally by the transmitter; and
Figure 4 shows a schematic diagram of a repeater suitable for implementing the present invention.

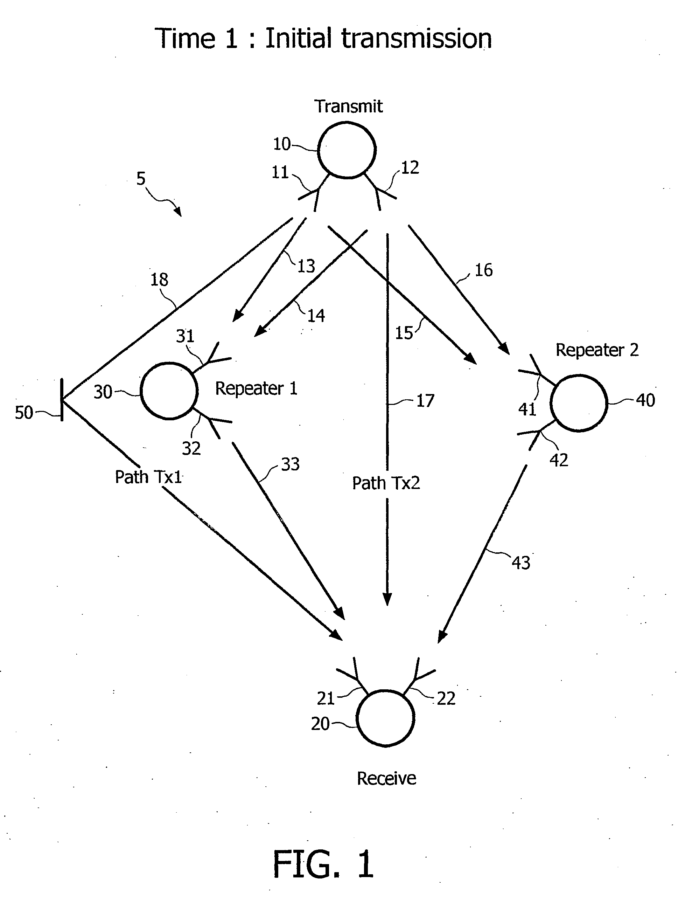

With reference to figure 1, a network 5 includes a number of nodes. A first node is a transmitter 10 which is provided with two transmit antennae 11, 12. These may be omnidirectional or directional, and may point in different directions or overlapping directions in accordance with conventional device design. A second node is a receiver 20 which is also provided with two receive antennae 21, 22 in similar fashion. Also provided within the network 5 is a first repeater transceiver device 30 with transmit and receive antennae 31, 32. A second repeater transceiver device 40 has transmit and receive antennae 41, 42.

Although not shown for simplicity of illustration, it will be understood that the transmitter 10 could also act as a receiver or a repeater transceiver; receiver 20 could also act as a transmitter or a repeater transceiver; and repeater transceivers 30, 40 could also act as transmitters and receivers in their own right. Furthermore, any of the antennae could be multiplexed to act as both transmit and receive antennae according to known practices.

Preferably, each of the nodes 10, 20, 30, 40 in the network 5 has one or more transmission paths between itself and adjacent or nearby nodes. For example, as shown in figure 1, the transmitter node 10 is configured for first and second direct transmission paths 13, 14 from antennae 11, 12 respectively to antenna 31 of repeater 30. Similarly, transmitter node 10 is configured for third and fourth direct transmission paths 15, 16 from antennae 11, 12 respectively to antenna 41 of repeater 40. Each of these repeater transceivers 30, 40 is respectively configured for a direct transmission path 33, 43 from antennae 32, 42 to the receiver 20. Data packets from transmitter 10 can thereby be forwarded to receiver 20.

In the illustration, transmitter 10 is also configured such that at least one direct transmission path 17 exists between itself and the receiver 20, eg. between antenna 12 and antenna 21, and an indirect transmission path 18 exists between itself and the receiver 20. The indirect path is formed by reflection, refraction or scattering of the signal off some object 50.

In the event of transmission of a data packet originating from the transmitter 10, the data packet reaches the receiver by at least one of the various paths illustrated, both direct and indirect, and also by way of repeater transceivers 30, 40.

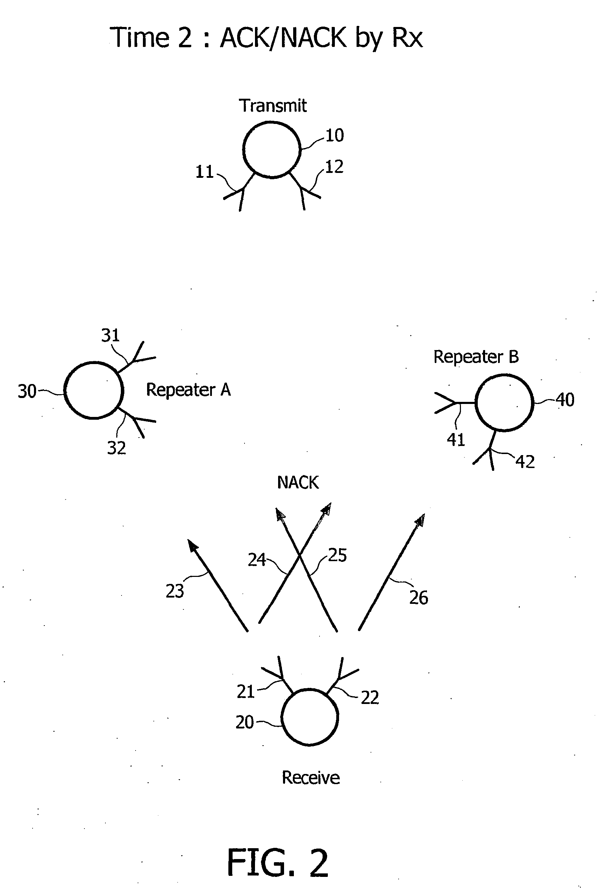

In the event that the receiver 20 receives the data packet in full, ie. the data is complete and uncorrupted, the receiver issues an ACK signal which is returned to the transmitter and/or repeater transceivers over similar paths as those described in connection with figure 1. Referring now to figure 2, in the event that the data does not arrive at the receiver 20 complete and uncorrupted, the receiver returns a NACK signal. The NACK signal is transmitted over various possible paths 23 - 26 as shown. For example, path 23 may be directed to antenna 32 of transceiver repeater 30; path 25 may be directed to antenna 11 of transmitter 10; path 24 may be directed at antenna 41 of repeater 40 and path 26 may be directed at antenna 42 of repeater 40.

In the prior art techniques, the transmitter 10 will await receipt of either the ACK or the NACK signal, either over a direct path, an indirect path, or via a repeater, before determining what further action to take. In the event that an ACK signal is received, the transmitter 10 knows that it can purge the data packet from its pending queue and, if necessary, report successful completion to a host device (not shown). In the event that a NACK signal is received, in prior art techniques the transmitter 10 knows that it must retransmit the data packet.

If the transmitter simply retransmits the data packet, there is a strong likelihood that whatever phenomena obstructed the first transmission of the data packet on the several available paths may still prevail, and the retransmitted data packet will then also result in a returned NACK signal. Even if, as proposed in some of the prior art, the transmitter adjusts the power of one or more of the antennae, or adjusts the data distribution of the data packet across the various paths (in the event that data packet splitting techniques for spatial and temporal diversity are employed), there is still a prospect that the same interference conditions will still prevail and again result in a returned NACK signal.

The present invention proposes that the receiver nodes 30, 40 can also or instead be used to initiate (ie. originate) retransmission of the data packet upon receiving a NACK signal. Thus, the NACK signal issued by the receiver 20 on path 23 will be received by the repeater 30 and the NACK signal issued by receiver on path 26 will be received by the repeater 40.

One or both repeaters 30, 40 may be programmed to become active retransmitters in the event of a received NACK signal in respect of a data packet for which they previously accepted forwarding responsibility. (They may also act in their conventional roles as forwarding or repeater nodes to return the NACK signal to the transmitter 10.)

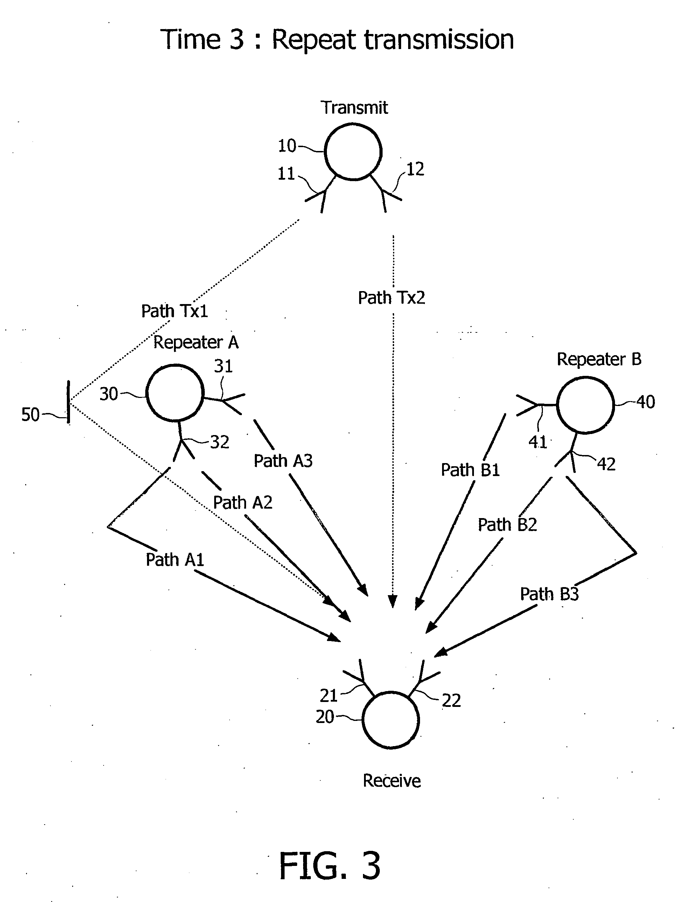

With reference to figure 3, it will be seen that in this instance, for the purposes of retransmission of the data packet, the pathways to the receiver 20 are increased, because all antennae and or transmission pathways from the repeater nodes, direct and indirect, can be used to retransmit the data packet.

The repeaters 30, 40 may also forward the NACK signal on to the transmitter 10 that originated the data packet, in which case this too may respond with a retransmission of the data packet, thus further increasing the probability that the retransmitted data packet will reach the destination receiver.

It will be understood from the foregoing that the transmitter does not need to partake in the retransmission of the data packet if that responsibility is devolved to one or more repeaters. In this case, the transmitter need not even listen for NACK signals in respect of data packets that it has sent. This is a particularly useful feature for low power devices or generally devices with a restricted power source, such as battery powered devices.

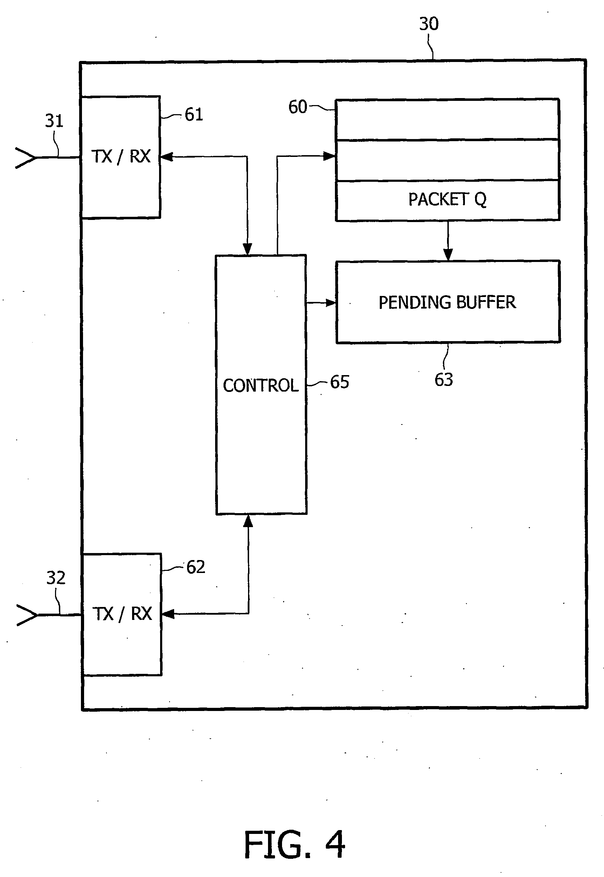

Figure 4 shows a preferred embodiment of repeater transceiver node 30. The repeater node 30 includes antennae 31, 32, each with its own transmit / receive driver circuit 61, 62. Preferably each repeater 30 in the network is adapted to receive data packets from at least one circuit 61, 62 an to place it into a FIFO packet queue 60 from which the data packets are forwarded under the control of control circuit 65.

Upon forwarding data packets, they are also transferred into a pending buffer 63 where they wait pending a responsive ACK or a NACK signal. Then, if a NACK signal is received in respect of a previously forwarded data packet, the repeater node 30 acts as an originating transmitter to retransmit the data packet stored in the pending buffer 63 to the receiver 20. Conversely, in the event that an ACK signal is received, the repeater clears the respective data packet from the pending buffer 63.

Each data packet in the pending buffer 63 preferably includes a time stamp which is used to trigger a retransmission after a predetermined retransmission delay in the event that neither ACK nor NACK signals are received.

It will be understood that a NACK signal issued by the receiver 20 may be responded to by a number of repeaters 30, 40 and also possibly by the transmitter 10. This increases the probability that at least one copy of the retransmitted data packet will arrive at the receiver.

A number of possible protocols may be deployed for ensuring appropriate data packet management. Each transmitted data packet is preferably uniquely identified so that each node can determine whether it is a data packet for which it has retransmission responsibility and to relate it to respective ACK / NACK signals. Depending upon network and data transport requirements, repeaters that fail to receive either an ACK or a NACK signal after a predetermined time may be programmed to either discard the data packet, or to retransmit the data packet.

Originating transmitters may be programmed to either require an ACK signal or not. In the event that the data transport protocols require that the transmitter get acknowledgement of correct receipt of data packets by the receiver, this can be done in a number of ways. For example, repeaters 30, 40 may be programmed to forward only ACK signals (but not NACK signals) to the transmitter, thus ensuring that all retransmission overhead falls on the repeaters.

This latter feature may be sufficient where the communication between transmitter and at least one repeater is highly reliable. However, where the transfer of data packet from transmitter to repeater is not guaranteed, the transmitter may be programmed with a retransmittal delay (the interval between the first transmittal of a packet and an attempted retransmittal in the event of no ACK or NACK signal being received) which is substantially greater than the retransmittal delay of the repeaters. In this arrangement, the repeaters 30, 40 will make several attempts to complete successful data packet transfer before the transmitter 10 does so. This clearly has beneficial implications for the power demand of the transmitter 10 compared with the repeaters.

In another arrangement, particularly useful where the transmitter is a power constrained device, the transmitter could be arranged not to listen for ACK or NACK signals at all. Repeater nodes may be programmed to temporarily store plural ACK signals from a series of data packets and transfer them in a burst to the transmitter at predetermined intervals or on demand by the transmitter.

Numerous alternative arrangements of repeater may be envisaged. For example, the packet queue 60 is not strictly necessary if real time forwarding is deployed. The packet queue 60 and the pending buffer 63 could be combined simply by flagging the status of respective entries.

Other embodiments are intentionally within the scope of the appended claims.

## Claims

1. A method of wireless data transmission between a transmitter (10) and a receiver (20), the method comprising the steps of:
- transmitting, by the transmitter, a data packet onto multiple paths (13 - 18) of a wireless network (5) between the transmitter and the receiver, the multiple paths comprising at least one path including at least one repeater transceiver node (30, 40) and a direct path between the transmitter and the receiver;
- receiving at least part of the data packet by the receiver via the direct path;
- receiving the data packet by the at least one repeater transceiver node;
- issuing a NACK signal over the network, by the receiver (20), indicating that the data packet is not properly received;
- receiving the NACK signal by the at least one repeater transceiver node; and
- retransmitting the data packet onto the wireless network by at least one of the repeater nodes (30, 40) upon receipt of the nack signal.

2. The method of claim 1 in which the retransmitting step is effected by all repeater nodes that forwarded the data packet and that receive the NACK signal.

3. The method of claim 1 in which the retransmitting step is effected by at least one of the repeater nodes (30, 40) and the transmitter (10).

4. The method of claim 1 in which the transmitter (10) does not retransmit the original data packet in the event of the issuing of a NACK signal by the receiver.

5. The method of claim 4 in which the transmitter (10) does not listen for NACK signals relating to its own transmitted data packets.

6. The method of claim 1 in which the step of retransmitting the data packets onto the network (5) by the at least one repeater node (30, 40) includes the step of using multiple paths available from the repeater node to the receiver.

7. The method of claim 1 further including the step of the receiver (20) issuing an ACK signal in the event that the data packet is correctly received, the at least one repeater node (30, 40) forwarding the ACK signal to the transmitter (10).

8. The method of claim 1 further including the step of retransmitting the data packet, by the repeater node (30, 40), after a first predetermined retransmittal interval if no ACK or NACK signal is received in respect of a forwarded data packet.

9. The method of claim 8 further including the transmitter (10) retransmitting the data packet step after a second predetermined retransmittal interval if no ACK signal is received, the second predetermined retransmittal interval being greater than the first predetermined retransmittal interval.

10. A wireless network of communicating nodes including a transmitter node (10), a receiver node (20) and at least one repeater node (30, 40) for forwarding data packets, received from a transmitter node (10), to the receiver node (20) that is the end destination of the packet, the wireless network comprising:
- a receive module (61) in the repeater node for receiving data packets originating from the transmitter;
- a transmit module (62) in the repeater node for forwarding the data packet to another node in the network;
- a pending packet buffer (63) in the repeater node for storing forwarded data packets; and
- retransmission means in the repeater node (30, 40) for retransmitting, over the network (5), previously forwarded data packets for which NACK signals are received from the receiver node by the repeater node,
wherein the receiver node is arranged relative to the transmitter node and the repeater node to receive data packets via multiple paths of the network between the transmitter node and the receiver node, at least one of the paths including said at least one repeater node and one of the paths being a direct wireless transmission path between the transmitter and the receiver.

11. The network of claim 10 in which the retransmission means, in the repeater node (30, 40), further includes means for retransmitting the data packet after a first predetermined retransmittal interval when no corresponding ACK or NACK signal is received.

12. The network of claim 11 further including second retransmission means, in the transmitter (10), for retransmitting the data packet after a second predetermined retransmittal interval longer than the first retransmittal interval, when no corresponding ACK or NACK signal is received.

## Patentansprüche

1. Verfahren zur drahtlosen Datenübertragung zwischen einem Sender (10) und einem Empfänger (20), wobei das Verfahren die folgenden Schritte umfasst:
- Übertragen eines Datenpakets durch den Sender auf mehrere Wege (13 bis 18) eines drahtlosen Netzwerks (5) zwischen dem Sender und dem Empfänger, wobei die mehreren Wege zumindest einen Weg umfassen, der zumindest einen Repeater-Transceiver-Knoten (30, 40) und einen direkten Weg zwischen dem Sender und dem Empfänger einschließt,
- Empfangen von zumindest einem Teil des Datenpakets durch den Empfänger über den direkten Weg,
- Empfangen des Datenpakets von dem zumindest einen Repeater-Transceiver-Knoten,
- Ausgeben eines NACK-Signals über das Netzwerk durch den Empfänger (20), das anzeigt, dass das Datenpaket nicht ordnungsgemäß empfangen wird,
- Empfangen des NACK-Signals durch den zumindest einen Repeater-Transceiver-Knoten und
- Wiederübertragen des Datenpakets auf das drahtlose Netzwerk durch zumindest einen der Repeater-Knoten (30, 40) bei Empfang des NACK-Signals.

2. Das Verfahren nach Anspruch 1, wobei der Wiederübertragungsschritt von sämtlichen Repeater-Knoten ausgeführt wird, die das Datenpaket weitergeleitet haben und die das NACK-Signal empfangen.

3. Das Verfahren nach Anspruch 1, wobei der Wiederübertragungsschritt durch zumindest einen der Repeater-Knoten (30, 40) und den Sender (10) ausgeführt wird.

4. Das Verfahren nach Anspruch 1, wobei der Sender (10) im Fall der Ausgabe eines NACK-Signals durch den Empfänger das ursprüngliche Datenpaket nicht wiederüberträgt.

5. Das Verfahren nach Anspruch 4, wobei der Sender (10) nicht auf NACK-Signale horcht, die seine eigenen übertragenen Datenpakete betreffen.

6. Das Verfahren nach Anspruch 1, wobei der Schritt des Wiederübertragens der Datenpakete auf das Netzwerk (5) durch den zumindest einen Repeater-Knoten (30,40) den Schritt des Verwendens mehrerer verfügbarer Wege von dem Repeater-Knoten zu dem Empfänger einschließt.

7. Das Verfahren nach Anspruch 1, weiterhin einschließend den Schritt des Ausgebens eines ACK-Signals durch den Empfänger (20), falls das Datenpaket korrekt empfangen wird, wobei der zumindest eine Repeater-Knoten (30, 40) das ACK-Signal an den Sender (10) weiterleitet.

8. Das Verfahren nach Anspruch 1, weiterhin einschließend den Schritt des Wiederübertragens des Datenpakets durch den Repeater-Knoten (30,40) nach einem ersten vorbestimmten Wiederübertragungsintervall, wenn kein ACK- oder NACK-Signal in Bezug auf ein weitergeleitetes Datenpaket empfangen wird.

9. Das Verfahren nach Anspruch 8, weiterhin einschließend den Schritt des Wiederübertragens des Datenpakets durch den Sender (10) nach einem zweiten vorbestimmten Wiederübertragungsintervall, wenn kein ACK-Signal empfangen wird, wobei das zweite vorbestimmte Wiederübertragungsintervall größer ist als das erste vorbestimmte Wiederübertragungsintervall.

10. Drahtloses Netzwerk kommunizierender Knoten, einschließend einen Sender-Knoten (10), einen Empfänger-Knoten (20) und zumindest einen Repeater-Knoten (30, 40) zum Weiterleiten von von einem Sender-Knoten (10) empfangenen Datenpaketen an den Empfänger-Knoten (20), der das endgültige Ziel des Pakets ist, wobei das drahtlose Netzwerk Folgendes umfasst:
- ein Empfangsmodul (61) in dem Repeater-Knoten zum Empfangen von Datenpaketen, die von dem Sender ausgehen,
- ein Übertragungsmodul (62) in dem Repeater-Knoten zum Weiterleiten des Datenpakets an einen weiteren Knoten in dem Netzwerk,
- einen Paketwartepuffer (63) in dem Repeater-Knoten zum Speichern weitergeleiteter Datenpakete und
- Wiederübertragungsmittel in dem Repeater-Knoten (30, 40) zum Wiederübertragen zuvor weitergeleiteter Datenpakete, für die durch den Repeater-KnotenNACK-Signale von dem Empfänger-Knoten empfangen werden, über das Netzwerk (5),
wobei der Empfänger-Knoten relativ zu dem Sender-Knoten angeordnet ist und der Repeater-Knoten so, dass er Datenpakete über mehrere Wege des Netzwerks zwischen dem Sender-Knoten und dem Empfänger-Knoten empfängt, wobei zumindest einer der Wege den zumindest einen Repeater-Knoten einschließt und einer der Wege ein direkter drahtloser Übertragungsweg zwischen dem Sender und dem Empfänger ist.

11. Das Netzwerk nach Anspruch 10, wobei das Wiederübertragungsmittel in dem Repeater-Knoten (30, 40) weiterhin Mittel einschließt zum Wiederübertragen des Datenpakets nach einem ersten vorbestimmten Wiederübertragungsintervall, wenn kein entsprechendes ACK- oder NACK-Signal empfangen wird.

12. Das Netzwerk nach Anspruch 11, weiterhin einschließend zweites Wiederübertragungsmittel in dem Sender (10) zum Wiederübertragen des Datenpakets nach einem zweiten vorbestimmten Wiederübertragungsintervall, das länger ist als das erste Wiederübertragungsintervall, wenn kein entsprechendes ACK- oder NACK-Signal empfangen wird.

## Revendications

1. Procédé de transmission de données sans fil entre un émetteur (10) et un récepteur (20), le procédé comportant les étapes :
- d'émission par l'émetteur d'un paquet de données selon de multiples trajets (13-18) d'un réseau sans fil (5) entre l'émetteur et le récepteur, les multiples trajets comprenant au moins un trajet incluant au moins un noeud d'émission-réception répéteur (30, 40) et un trajet direct entre l'émetteur et le récepteur ;
- de réception d'au moins une partie du paquet de données par le récepteur via le trajet direct ;
- de réception du paquet de données par au moins un noeud d'émission-réception répéteur ;
- d'émission d'un signal NACK sur le réseau, par le récepteur (20), indiquant que le paquet de données n'a pas été reçu correctement ;
- de réception du signal NACK par au moins un noeud d'émission-réception répéteur ; et
- de réémission du paquet de données sur le réseau sans fil grâce à l'un au moins des noeuds répéteurs (30, 40) à réception du signal NACK.

2. Procédé selon la revendication 1 dans lequel l'étape de réémission est effectuée par tous les noeuds répéteurs qui ont transmis le paquet de données et qui reçoivent le signal NACK.

3. Procédé selon la revendication 1, dans lequel l'étape de réémission est effectuée par au moins un des noeuds répéteurs (30, 40) et par l'émetteur (10).

4. Procédé selon la revendication 1, dans lequel l'émetteur (10) ne réémet pas le paquet de données original en cas d'émission d'un signal NACK par le récepteur.

5. Procédé selon la revendication 4, dans lequel l'émetteur (10) n'écoute pas les signaux NACK correspondant aux paquets de données qu'il a lui-même émis.

6. Procédé selon la revendication 1, dans lequel l'étape de réémission des paquets de données sur le réseau (5) par au moins un noeud répéteur (30, 40) comprend l'étape consistant à utiliser de multiples trajets du noeud répéteur vers le récepteur.

7. Procédé selon la revendication 1, comprenant en outre l'étape où le récepteur (20) émet un signal ACK dans le cas où le paquet de données a été reçu correctement, au moins un noeud répéteur (30, 40) transmettant le signal ACK à l'émetteur (10).

8. Procédé selon la revendication 1 comprenant l'étape consistant à réémettre le paquet de données par le noeud répéteur (30, 40) après un premier intervalle de réémission prédéterminé si aucun signal ACK ou NACK n'a été reçu pour un paquet de données réacheminé.

9. Procédé selon la revendication 8 comprenant l'émetteur (10) réémettant le paquet de données après un deuxième intervalle de réémission prédéterminé si aucun signal ACK n'a été reçu, le deuxième intervalle de réémission prédéterminé étant supérieur au premier intervalle de réémission prédéterminé.

10. Réseau sans fil de noeuds de communication comprenant un noeud émetteur (10), un noeud récepteur (20) et au moins un noeud répéteur (30, 40) pour réacheminer des paquets de données, reçus à partir d'un noeud émetteur (10), vers le noeud récepteur (20) qui est la destination finale du paquet, le réseau sans fil comprenant :
- un module de réception (61) dans le noeud répéteur pour recevoir des paquets de données provenant de l'émetteur ;
- un module d'émission (62) dans le noeud répéteur pour réacheminer le paquet de données vers un autre noeud dans le réseau ;
- un tampon de paquets en attente (63) dans le noeud répéteur pour stocker les paquets de données réacheminés ; et
- des moyens de réémission dans le noeud répéteur (30, 40) pour réémettre, sur le réseau (5), des paquets de données réacheminés auparavant pour lesquels des signaux NACK ont été reçus du noeud récepteur par le noeud répéteur,
dans lequel le noeud récepteur est disposé par rapport au noeud émetteur et au noeud répéteur pour recevoir des paquets de données par de multiples trajets du réseau entre le noeud émetteur et le noeud récepteur, au moins un de ces trajets incluant au moins un noeud répéteur, et un des trajets étant un trajet d'émission sans fil direct entre l'émetteur et le récepteur.

11. Réseau selon la revendication 10, dans lequel les moyens de réémission dans le noeud répéteur (30, 40) comprennent en outre des moyens pour réémettre le paquet de données après un premier intervalle de réémission prédéterminé lorsqu'aucun signal ACK ou NACK n'a été reçu.

12. Réseau selon la revendication 11 comprenant en outre des deuxièmes moyens de réémission dans l'émetteur (10) pour réémettre le paquet de données après un deuxième intervalle de réémission prédéterminé supérieur au premier intervalle de réémission, lorsqu'aucun signal ACK ou NACK correspondant n'a été reçu.
